# EUROPÄISCHE PATENTANMELDUNG

(11) **EP 1 179 946 A2**
(43) Veröffentlichungstag der Anmeldung: **13.02.2002**
(21) Anmeldenummer: 01117443.0
(22) Anmeldetag: 19.07.2001
(51) Int. Cl.: H04M 1/2745, H04M 1/57

(54) **Verfahren zum Ablegen eines Eintrags in einem Speicher eines Kommunikationsgeräts und Kommunikationsgerät zur Durchführung des Verfahrens**

(30) Priorität: 11.08.2000 DE 10039351
(71) Anmelder: Tenovis GmbH & Co. KG, 60326 Frankfurt am Main (DE)
(72) Erfinder: Schlesinger, Jürgen, 64572 Büttelborn (DE); Vogel, Uwe, 65551 Limburg (DE)
(74) Vertreter: Patentanwaltskanzlei WILHELM & BECK

(57) **Zusammenfassung**

Es wird ein Verfahren zum Ablegen eines Eintrags in einem Speicher eines Kommunikationsgeräts und ein Kommunikationsgerät geschrieben, bei dem einem Eintrag im Speicher des Kommunikationsgerätes ein Attribut zugeordnet wird. Die Art und Weise der Abspeicherung des Eintrags wird durch das Attribut festgelegt. Auf diese Weise kann ein Anrufer die Art und Weise der Eintragung einstellen.

## Beschreibung

Verfahren zum Ablegen eines Eintrags in einem Speicher eines Kommunikationsgeräts und Kommunikationsgerät zur Durchführung des Verfahrens

Die Erfindung betrifft ein Verfahren zum Ablegen eines Eintrags in einem Speicher eines Kommunikationsgeräts gemäß dem Oberbegriff des Patentanspruchs 1 und Kommunikationsgeräte gemäß den Oberbegriffen der Ansprüche 11 und 16.

Kommunikationsgeräte wie z. B. Telefonanlagen ermöglichen es einem Benutzer, einen Eintrag in einem Speicher einer angerufenen Telefonanlage zu hinterlegen. Dabei werden beispielsweise die Telefonnummer der anrufenden Telefonanlage und die Uhrzeit des Anrufes abgespeichert.

Aus EP 0 501 903 A1 ist ein Verfahren für eine optimale Telefonanrufverteilung bekannt, bei der vor der Weiterschaltung eines ankommenden Anrufes die Telefonnummer der anrufenden Telefonanlage mit einer abgespeicherten Telefonliste überprüft wird und der Anruf nur dann weitergeleitet wird, wenn die Telefonnummer der anrufenden Telefonanlage mit einer der Telefonnummern übereinstimmt, die in der Liste abgespeichert sind.

Die Aufgabe der Erfindung besteht darin, eine verbesserte Nutzung der Einträge in einem Speicher eines Kommunikationsgeräts bereitzustellen.

Die Aufgabe der Erfindung wird durch die Merkmale des Anspruchs 1, 10 und 16 gelöst. Ein wesentlicher Vorteil der Erfindung besteht darin, dass der Eintrag mit einem Attribut versehen wird, wobei das Attribut eine Bedingung festlegt, in deren Abhängigkeit die Art und Weise der Abspeicherung und/oder ein Löschen des Eintrags erfolgt.

Weitere vorteilhafte Ausbildungen der Erfindung sind in den abhängigen Ansprüchen angegeben.

In einer bevorzugten Ausführungsform legt das Attribut einen Zeitpunkt fest, zu dem der Eintrag im Speicher abgespeichert wird.

Eine weitere bevorzugte Ausführungsform der Erfindung besteht darin, dass das Attribut festlegt, dass der Eintrag erst nach einer Betätigung des Kommunikationsgeräts im Speicher des Kommunikationsgeräts abgespeichert wird. Auf diese Weise werden beispielsweise unnötige Einträge vermieden.

Weiterhin ist es von Vorteil, ein Attribut zu verwenden, das einen Zeitraum festlegt, während dessen der Eintrag im Speicher gespeichert bleibt und/oder angezeigt wird. Auf diese Weise kann der Anrufer den Zeitraum festlegen, bis zu dem der Anrufer einen Rückruf erwartet.

Diese Ausführungsform bietet weiterhin den Vorteil, dass ein Eintrag beispielsweise erst dann abgelegt wird, wenn der Anrufer wieder erreichbar ist.

Vorzugsweise sind die Attribute voreingestellt und werden automatisch dem Eintrag hinzugefügt.

In einer weiteren Ausführungsform ist eine Vielzahl von Attributen im Speicher des ersten Kommunikationsgeräts abgelegt und es wird ein Attribut über eine Eingabe am ersten Kommunikationsgerät ausgewählt, das bei einem Kontakt mit einem zweiten Kommunikationsgerät dem Eintrag hinzugefügt wird. Die Verwendung vorgegebener Attribute ermöglicht eine einfache und bedienerfreundliche Handhabung des erfindungsgemäßen Verfahrens.

Vorzugsweise wird vom zweiten Kommunikationsgerät ein Signal ausgegeben, wenn ein Eintrag in den Speicher eingetragen, angezeigt oder ein Eintrag aus dem Speicher gelöscht wird. Auf diese Weise erhält ein Benutzer des zweiten Kommunikationsgeräts einen Hinweis auf eine entsprechende Aktion.

In einer weiteren vorteilhaften Ausführungsform wird das Attribut eines Eintrags durch einen weiteren Kontakt mit dem zweiten Kommunikationsgerät verändert. Auf diese Weise wird eine flexiblere Handhabung der Einträge ermöglicht.

Vorzugsweise sind im ersten Kommunikationsgerät vorgegebenen zweiten Kommunikationsgeräten festgelegte Attribute zugeordnet, die bei einem Kontakt des ersten Kommunikationsgeräts mit einem zweiten Kommunikationsgerät einem Eintrag im Speicher des zweiten Kommunikationsgeräts hinzugefügt werden. Auf diese Weise kann eine Einteilung der Attribute zu vorgegebenen zweiten Kommunikationsgeräten vorgenommen werden. Diese Ausführungsform ermöglicht beispielsweise eine Priorisierung von zweiten Kommunikationsgeräten.

Die Erfindung wird im folgenden anhand der Figuren näher erläutert.

Figur 1 zeigt einen schematischen Aufbau einer Kommunikationsanordnung und

Figur 2 einen schematischen Programmablauf zur Durchführung des erfindungsgemäßen Verfahrens.

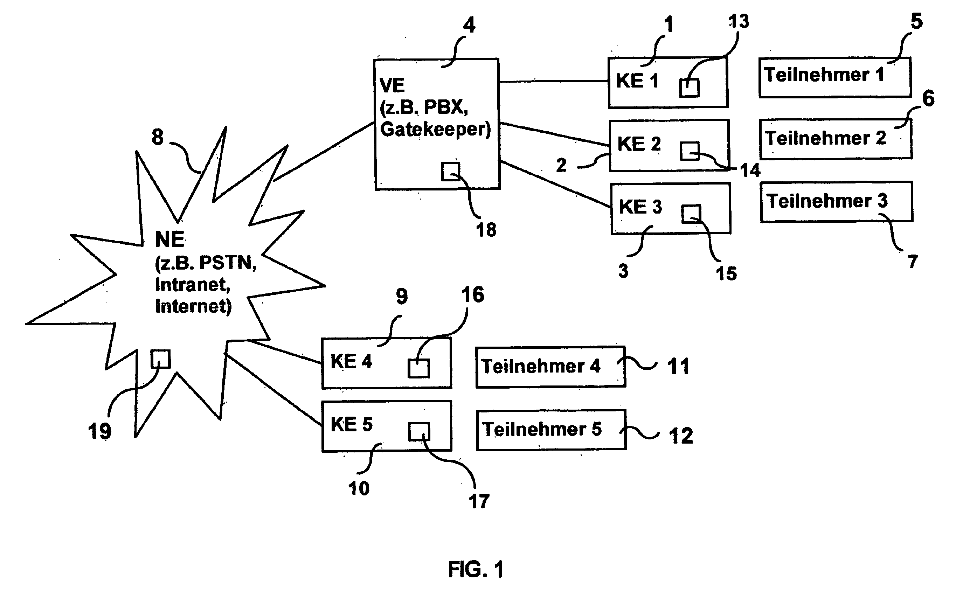

Figur 1 zeigt eine Kommunikationsanordnung mit einem ersten Kommunikationsgerät 1, einem zweiten Kommunikationsgerät 2 und einem dritten Kommunikationsgerät 3. Die Kommunikationsgeräte sind an eine Vermittlungseinheit 4 mit einem vierten Speicher 18 angeschlossen. Als Kommunikationsgeräte 1, 2, 3 sind beispielsweise Kommunikationsendeinrichtungen wie Telefone oder Computersysteme angeordnet. Jedes Kommunikationsgerät 1, 2, 3 weist einen ersten, zweiten bzw. dritten Speicher 13, 14, 15 auf und ist einem Teilnehmer 5, 6, 7 zugeordnet, die das jeweilige Kommunikationsgerät 1, 2, 3 bedienen.

Als Vermittlungseinheit 4 ist beispielsweise eine Vermittlungsstation in Form eines Private-Branch-Exchange-Systems oder ein Gatekeeper angeordnet.

Die Vermittlungseinrichtung 4 steht mit einem Netzwerk 8 in Verbindung, das wiederum mit einem vierten Kommunikationsgerät 9 und einem fünften Kommunikationsgerät 10 verbunden ist. Das Netzwerk 8 weist einen fünften Speicher 19 auf. Das vierte und fünfte Kommunikationsgerät 9, 10 verfügt über einen fünften bzw. sechsten Speicher 16, 17. Das vierte und fünfte Kommunikationsgerät 9, 10 wird von einem vierten und fünften Teilnehmer 11, 12 bedient. Das Netzwerk 8 kann in jeder Form eines Netzwerkes wie z. B. PSTN, Internet, Intranet usw. ausgebildet sein. Auch die Art der physikalischen Verbindung zwischen den Kommunikationsgeräten, der Vermittlungseinrichtung 4 und dem Netzwerk 8 kann in jeder beliebigen Form ausgebildet sein und z. B. als sternförmige Verkabelung, Bussystem oder Internet realisiert sein. Die Kommunikationsgeräte weisen eine Recheneinheit auf, mit der Verfahren in Form von Softwareprogrammen abgearbeitet werden. Weiterhin weist jedes Kommunikationsgerät 1, 2, 3, 9, 10 eine Schnittstelle auf, mit der ein Daten- und Signalaustausch mit der Vermittlungseinrichtung 4 und/oder dem Netzwerk 8 stattfindet. Das Netzwerk 8 umfasst eine Netzwerkrecheneinheit, die den Daten- und Signalaustausch über das Netzwerk 8 durchführt. Jedes Kommunikationsgerät 1, 2, 3, 9, 10 weist eine Eingabe beispielweise in Form einer Tastatur und eine Ausgabe beispielweise in Form eines Displays auf.

Der erste, zweite und dritte Teilnehmer 5, 6, 7 kann über das erste, zweite und dritte Kommunikationsgerät 1, 2, 3 und die Vermittlungseinrichtung 4 über einen Telefonanruf einen Kontakt zu dem jeweiligen Kommunikationsgerät 1, 2, 3 der anderen Teilnehmer 5, 6, 7 aufbauen.

Weiterhin ist es möglich, dass das erste, zweite und dritte Kommunikationsgerät 1, 2, 3 über die Vermittlungseinrichtung 4, und das Netzwerk 8 eine Verbindung zu dem vierten oder fünften Kommunikationsgerät 9, 10 aufbauen.

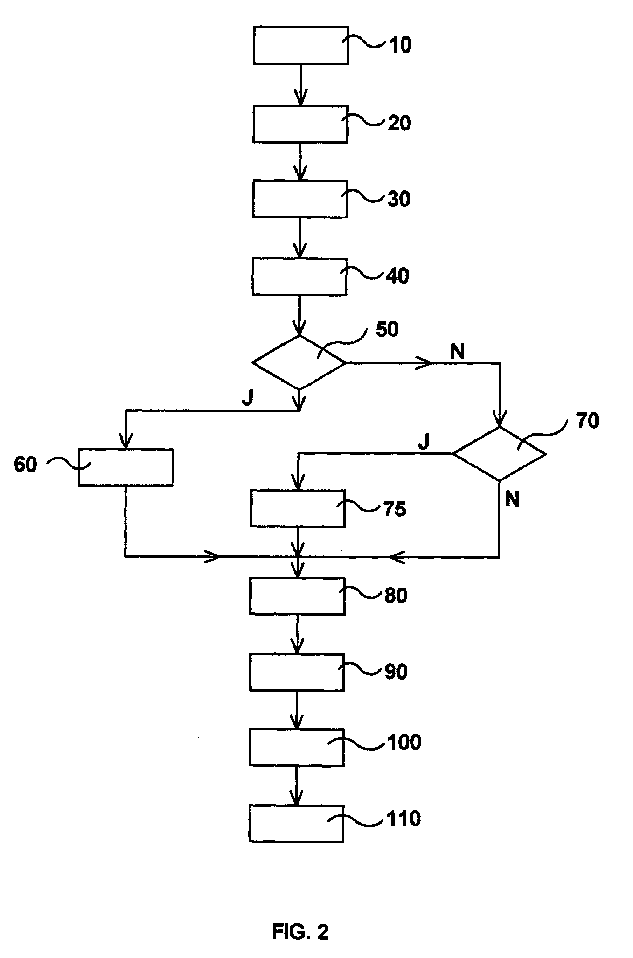

Im folgenden wird anhand des Programmablaufs der Figur 2 das erfindungsgemäße Verfahren näher erläutert. Bei Programmpunkt 10 wählt der erste Teilnehmer 5 am ersten Kommunikationsgerät 1 eine Telefonnummer eines gewünschten Gesprächspartners. Das erste Kommunikationsgerät 1 gibt die Telefonnummer an die Vermittlungseinrichtung 4 weiter. Die Vermittlungseinrichtung 4 sucht aufgrund der vorgegebenen Telefonnummer den gewünschten Gesprächspartner bei Programmpunkt 20. In dem beschriebenen Ausführungsbeispiel will der erste Teilnehmer 5 den dritten Teilnehmer 7 sprechen. Folglich baut die Vermittlungseinrichtung 4 bei Programmpunkt 30 eine Verbindung zwischen dem ersten Kommunikationsgerät 1 und dem dritten Kommunikationsgerät 3 auf.

Meldet sich nun beim folgenden Programmpunkt 40 der dritte Teilnehmer 7 nicht am dritten Kommunikationsgerät 3, so stellt der erste Teilnehmer 5 über eine entsprechende Eingabe an dem ersten Kommunikationsgerät 1 ein Attribut ein, das festlegt, auf welche Art und Weise ein Eintrag für das dritte Kommunikationsgerät 3 folgen soll. In einer bevorzugten Ausführungsform sind eine Vielzahl von Attributen in einem Speicher des ersten Kommunikationsgeräts 1 abgelegt und der erste Teilnehmer 5 wählt sich über eine entsprechende Eingabe einer Tastenkombination ein vorgegebenes Attribut aus.

In einer bevorzugten Ausführungsform der Erfindung wird ein Attribut automatisch einer Verbindung zugeordnet, so dass der erste Teilnehmer 5 keine Auswahl eines Attributs treffen muss. Vorzugsweise ist bei einer automatischen Auswahl eines Attributs einem vorgegebenen Kommunikationsgerät 2, 3, 9, 10 ein vorgegebenes Attribut zugeordnet. Beispielsweise ist im ersten Kommunikationsgerät 1 abgespeichert, dass kein Attribut einem Eintrag zugeordnet werden soll, wenn eine Verbindung mit dem zweiten Kommunikationsgerät 2 aufgebaut wird. Weiterhin ist beispielsweise im ersten Kommunikationsgerät 1 die Information abgespeichert, dass, wenn eine Verbindung mit dem dritten Kommunikationsgerät 3 aufgebaut wird, das Attribut dem Eintrag hinzugefügt wird, dass der Eintrag nur für einen Tag beim dritten Kommunikationsgerät 3 abgespeichert werden soll. Es sind eine Vielzahl von Kombinationsmöglichkeiten zwischen den Bedingungen, die durch die Attribute festgelegt sind, und vorgegebenen Kommunikationsgeräten möglich. Die angegebenen Beispiele stellen nur eine einfache und nicht abschließende Auswahl dar. Eine entsprechende Ausbildung der Attribute wird der Fachmann je nach Anwendungsfall vornehmen.

Bei Programmpunkt 50 wird überprüft, ob ein Eintrag sofort in das angerufene dritte Kommunikationsgerät 3 abgespeichert werden soll. Ist dies der Fall, so wird nach Programmpunkt 60 verzweigt.

Bei Programmpunkt 60 wird der Eintrag, der beispielsweise die Telefonnummer des Anrufers und die Uhrzeit beinhaltet und das zugeordnete Attribut in einen Speicher des dritten Kommunikationsgeräts 3 abgelegt. Anschließend wird nach Programmpunkt 80 verzweigt.

Ergibt die Abfrage bei Programmpunkt 50, dass ein Eintrag nicht sofort in einen Speicher des angerufenen, dritten Kommunikationsgeräts 3 abgelegt werden soll, so wird nach Programmpunkt 70 verzweigt.

Bei Programmpunkt 70 wird überprüft, ob eine Eintragung in Abhängigkeit von dem festgelegten Attribut in der Vermittlungseinrichtung 4 abgespeichert werden soll. Ist dies der Fall, so wird nach Programmpunkt 75 verzweigt. Bei Programmpunkt 75 wird der Eintrag mit dem zugeordneten Attribut in einen Speicher der Vermittlungseinrichtung 4 abgespeichert. Beispielsweise kann das Attribut darin bestehen, dass die Vermittlungseinrichtung 4 zu einem vorgegebenen Zeitpunkt die Eintragung in den Speicher des dritten Kommunikationsgeräts 3 übertragen soll. Damit wird die Funktion gewährleistet, dass eine Eintragung erst zu einem vorgegebenen Zeitpunkt beim dritten Kommunikationsgerät 3 abgelegt ist.

Diese Funktion kann jedoch auch in der Weise dargestellt werden, dass das Attribut, das dem Eintrag zugeordnet ist, festlegt, dass der Eintrag im Speicher des dritten Kommunikationsgeräts 3 zwar sofort abgelegt wird, dass jedoch der Eintrag erst zu dem vorgegebenen Zeitpunkt für den dritten Teilnehmer 7 in einer Anruferliste auf einem Display sichtbar ist.

Ergibt die Abfrage bei Programmpunkt 70, dass keine Abspeicherung in der Vermittlungseinrichtung 4 vorgenommen werden soll, so wird direkt nach Programmpunkt 80 verzweigt.

Als mögliche Attribute sind beispielsweise folgende Funktionen denkbar:

Das Attribut legt eine Zeitspanne fest, während dessen die Eintragung im Speicher des dritten Kommunikationsgeräts 3 abgespeichert bleibt und/oder dem dritten Teilnehmer 7 angezeigt wird. Auf diese Weise kann eine Zeitspanne festgelegt werden, während dessen die Eintragung dem dritten Teilnehmer überhaupt zur Kenntnis gebracht werden soll. Beispielsweise ist diese Funktion vorteilhaft, wenn der erste Teilnehmer 1 nur noch während einer vorgegebenen Zeitspanne erreichbar ist oder die Information nur während der vorgegebenen Zeitspanne benötigt.

Ein weiteres Attribut besteht darin, dass eine Anfangs- und/oder Endzeit für die Abspeicherung und/oder die Anzeige der Eintragung festgelegt wird. Dieses Attribut wird vorzugsweise, wie oben beschrieben, in der Vermittlungseinrichtung 4 mit der Eintragung abgespeichert, wobei die Vermittlungseinrichtung 4 die zeitlich versetzte Abspeicherung des Eintrags in dem Speicher des dritten Kommunikationsgeräts 3 vornimmt.

Weiterhin kann das Attribut darin bestehen, einen bereits bestehenden Eintrag im Speicher des dritten Kommunikationsgeräts zu löschen. Erhält das dritte Kommunikationsgerät 3 ein entsprechendes Attribut, so vergleicht das dritte Kommunikationsgerät 3 die abgespeicherten Eintragungen mit dem Eintrag, die mit dem Attribut geliefert wird, und löscht den bestehenden Eintrag, wenn die Eintragungen übereinstimmen. Zudem wird kein neuer Eintrag für diese Verbindung abgespeichert.

Diese Ausführungsform wird im weiteren Programmablauf ab Programmpunkt 80 beschrieben. Bei Programmpunkt 80 ruft der erste Teilnehmer 1 über das erste Kommunikationsgerät 1 und die Vermittlungseinrichtung 4 erneut den dritten Teilnehmer 7 an. Dazu baut die Vermittlungseinrichtung 4 erneut eine Verbindung zwischen dem ersten und dem dritten Kommunikationsgerät 1, 3 bei Programmpunkt 90 auf.

Da nun der erste Teilnehmer 5 den vorherigen Eintrag in dem Speicher des dritten Kommunikationsgeräts 3 löschen will, drückt der erste Teilnehmer 5 eine vorgegebene Tastenkombination, die dem erneuten Eintrag das entsprechende Attribut, Löschen des vorherigen Eintrags, zuordnet.

Beim folgenden Programmpunkt 100 löscht entweder direkt das erste Kommunikationsgerät 1 den vorherigen Eintrag des ersten Kommunikationsgeräts 1 in dem Speicher des dritten Kommunikationsgeräts 3 oder das dritte Kommunikationsgerät 3 überprüft die Eintragungen und die zugehörigen Attribute und stellt dabei fest, dass der vorherige Eintrag und der jetzige Eintrag gelöscht werden sollen. Daraufhin löscht das dritte Kommunikationsgerät 3 die beiden Einträge.

Eine weitere vorteilhafte Ausführungsform besteht darin, dass bei einem erneuten Aufbau einer Verbindung zwischen dem ersten Kommunikationsgerät 1 und dem dritten Kommunikationsgerät 3 der erste Teilnehmer 5 die Möglichkeit hat, ein Attribut einer vorhergehenden Eintragung zu verändern. Dazu gibt der erste Teilnehmer 5 eine entsprechende Tastenkombination am ersten Kommunikationsgerät 1 bei Programmpunkt 110 ein, während eine Verbindung zwischen dem ersten und dem dritten Kommunikationsgerät 1, 3 besteht. Durch die Eingabe der Tastenkombination wird ein anderes Attribut ausgewählt und dem vorherigen Eintrag zugeordnet, als dem vorhergehenden Eintrag des ersten Teilnehmers 5 zugeordnet war. In einer einfachen Ausführungsform speichert der Speicher der dritten Kommunikationseinrichtung 3 nur einen Eintrag für ein Kommunikationsgerät 1, 2, 9, 10 ab, so dass automatisch der Eintrag mit dem zeitlich neuesten Attribut abgespeichert wird.

In einer bevorzugten Ausführungsform überprüft das dritte Kommunikationsgerät 3 die Einträge im Speicher und erkennt bei der Überprüfung, dass vom ersten Kommunikationsgerät 1 zwei Einträge, die zeitlich versetzt gespeichert wurden, vorliegen. Bei der Überprüfung des Attributes des späteren Eintrags erkennt das Kommunikationsgerät 3, dass das Attribut des vorhergehenden Eintrags geändert werden soll und die spätere Eintragung gelöscht werden soll. Diese Funktion führt das dritte Kommunikationsgerät 3 aus, so dass anschließend nur noch der erste Eintrag mit einem veränderten Attribut im Speicher des dritten Kommunikationsgeräts 3 abgespeichert ist. Eine Identität der Einträge erkennt das dritte Kommunikationsgerät 3 beispielweise an der Telefonnummer, die in den Einträgen enthalten ist.

Beispielsweise kann eine Änderung des Attributes eines vorhergehenden Eintrags auch in einer Löschung der gesamten Eintrags bestehen. Das veränderte Attribut besteht dann darin, den Eintrag nicht abzuspeichern.

Eine bevorzugte Ausführungsform des Attributes besteht darin, dass der Eintrag erst nach einer Betätigung des zweiten Kommunikationsgeräts entweder in den Speicher des zweiten Kommunikationsgeräts abgespeichert wird oder nach einer vorherigen Abspeicherung dem dritten Teilnehmer 7 des dritten Kommunikationsgeräts über ein Display angezeigt wird.

In einer bevorzugten Ausführungsform der Erfindung gibt das dritte Kommunikationsgerät 3 bei Abspeicherung eines Eintrags ein optisches oder akustisches Signal ab. Dies bietet den Vorteil, dass der dritte Teilnehmer 7 auf eine Abspeicherung und/oder Änderung eines Attributes eines Eintrags hingewiesen wird.

In einer bevorzugten Ausführungsform sind im dritten Kommunikationsgerät 3 vorgegebenen Attribute zu festgelegten Kommunikationsgeräten abgelegt, die mit einem Eintrag bei einem Aufbau einer Verbindung durch die festgelegten Kommunikationsgeräte im Speicher des dritten Kommunikationsgeräts 3 automatisch mit abgelegt werden. Auf diese Weise kann das dritte Kommunikationsgerät bzw. der dritte Teilnehmer 7 beispielsweise eine Vorauswahl oder eine Priorisierung der Einträge vornehmen.

Das erfindungsgemäße Verfahren wurde in dem Programmablauf der Figur 2 anhand einer Verbindung zwischen dem ersten und dem dritten Kommunikationsgerät 1, 3 über die Vermittlungseinrichtung 4 beschrieben. Die Erfindung ist jedoch nicht auf diese Verbindungsart beschränkt, sondern kann auf jede Art von Verbindungen zwischen den Kommunikationsgeräten 1, 2, 3, 9, 10 angewendet werden. Bei einer Verbindung zwischen dem ersten Kommunikationsgerät 1 und beispielsweise dem vierten Kommunikationsgerät 9 über die Vermittlungseinrichtung 4 und das Netzwerk 8 werden die Einträge wie bei dem Programmablauf der Figur 2 durchgeführt. Jedoch kann anstelle einer Speicherung des Eintrags mit einem zugeordneten Attribut bei der Vermittlungseinrichtung 4 die Speicherung des Eintrages mit Attribut auch in einem siebten Speicher 19 des Netzwerks 8 erfolgen und dann führt das Netzwerk 8 die entsprechende zeitlich versetzte Eintragung beim vierten Kommunikationsgerät 9 aus.

## Patentansprüche

1. Verfahren zum Ablegen eines Eintrags in einem Speicher eines Kommunikationsgeräts,
wobei ein erstes Kommunikationsgerät eine Verbindung mit einem zweiten Kommunikationsgerät aufnimmt und ein Eintrag in dem Speicher des zweiten Kommunikationsgeräts abgelegt wird,
**dadurch gekennzeichnet,**
**dass** der Eintrag mit einem Attribut versehen wird,
**dass** das Attribut eine Bedingung festlegt,
**dass** die Bedingung überprüft wird,
und **dass** der Eintrag in einer festgelegten Art und Weise gespeichert und/oder bearbeitet wird, wenn die Bedingung erfüllt ist.

2. Verfahren nach Anspruch 1, **dadurch gekennzeichnet, dass** das Attribut einen Zeitpunkt festlegt, zu dem der Eintrag im Speicher (14, 15, 16, 17) des zweiten Kommunikationsgeräts (2, 3, 9, 10) abgespeichert wird.

3. Verfahren nach einem der Ansprüche 1 oder 2, **dadurch gekennzeichnet, dass** das Attribut festlegt, dass der Eintrag erst nach einer Betätigung des zweiten Kommunikationsgeräts (2, 3, 9, 10) in den Speicher (14, 15, 16,17) des zweiten Kommunikationsgeräts (2, 3, 9, 10) eingetragen wird.

4. Verfahren nach Anspruch 1, **dadurch gekennzeichnet, dass** das Attribut einen Zeitraum festlegt, während dessen der Eintrag im Speicher (14, 15, 16, 17) gespeichert bleibt und/oder angezeigt wird.

5. Verfahren nach Anspruch 4, **dadurch gekennzeichnet, dass** das Attribut festlegt, dass der Zeitraum erst nach einer Betätigung des zweiten Kommunikationsgeräts (2, 3, 9, 10) beginnt.

6. Verfahren nach einem der Ansprüche 1 bis 5, **dadurch gekennzeichnet, dass** das Attribut im ersten oder zweiten Kommunikationsgerät (1, 2, 3, 9, 10) voreingestellt ist und bei einer Verbindung der beiden Kommunikationsgeräte (1, 2, 3, 9, 10) dem Eintrag im zweiten Kommunikationsgerät (2, 3, 9, 10) hinzugefügt wird.

7. Verfahren nach Anspruch 6, **dadurch gekennzeichnet, dass** eine Vielzahl von Attributen in einem Speicher (13) des ersten Kommunikationsgeräts (1) abgelegt ist,
dass ein Attribut über eine Eingabe am ersten Kommunikationsgerät (1) ausgewählt wird,
und dass bei einer Verbindung mit einem zweiten Kommunikationsgerät (2, 3, 9, 10) dem Eintrag das festgelegte Attribut mitgegeben wird.

8. Verfahren nach einem der Ansprüche 1 bis 7, **dadurch gekennzeichnet, dass** ein Signal vom zweiten Kommunikationsgerät (2, 3, 9, 10) ausgegeben wird, wenn ein Eintrag in den Speicher eingetragen oder ein Attribut und/oder ein Eintrag bearbeitet wird.

9. Verfahren nach einem der Ansprüche 1 bis 5, **dadurch gekennzeichnet, dass** das Attribut, das im Speicher des zweiten Kommunikationsgeräts (2, 3, 9, 10) zu einem Eintrag abgelegt ist, bei einer weiteren Verbindung mit dem zweiten Kommunikationsgerät (2, 3, 9, 10 ) verändert wird.

10. Verfahren nach einem der Ansprüche 1 bis 9, **dadurch gekennzeichnet, dass** für vorgegebene zweite Kommunikationsgeräte (2, 3, 9, 10) vorgegebene Attribute festgelegt sind, dass die festgelegten Attribute bei einer Verbindung mit den zweiten Kommunikationsgeräten (2, 3, 9, 10) den Einträgen hinzugefügt werden.

11. Kommunikationsgerät (1) mit einer Recheneinheit und mit einer Schnittstelle zum Aufbauen einer Verbindung zu einem zweiten Kommunikationsgerät(2, 3, 9, 10),
wobei das Kommunikationsgerät (1) ausgebildet ist, um nach dem Aufbau einer Verbindung mit dem zweiten Kommunikationsgerät (2, 3, 9, 10) einen Eintrag in einem Speicher (14, 15, 16, 17) des zweiten Kommunikationsgeräts (2, 3, 9, 10) abzulegen,
**dadurch gekennzeichnet,**
**dass** das Kommunikationsgerät (1) ausgebildet ist, um den Eintrag mit einem Attribut zu versehen,
**dass** das Attribut eine Bedingung festlegt,
die die Art und Weise der Speicherung und/oder Bearbeitung des Eintrages im Speicher (14, 15, 16, 17) des zweiten Kommunikationsgerätes (2, 3, 9, 10) festlegt.

12. Kommunikationsgerät nach Anspruch 11, **dadurch gekennzeichnet, dass** das Kommunikationsgerät (1) einen Speicher
(13) aufweist,
dass in dem Speicher (13) mehrere Attribute abgelegt sind, und dass durch eine Betätigung einer Taste ein Attribut ausgewählt wird, das bei der bestehenden und/oder nächsten Verbindung mit einem zweiten Kommunikationsgerät (2, 3, 9, 10) dem Eintrag hinzugefügt wird.

13. Kommunikationsgerät nach einem der Ansprüche 11 oder 12, **dadurch gekennzeichnet, dass** das Kommunikationsgerät (1) ausgebildet ist, um bei einer Verbindung mit dem zweiten Kommunikationsgerät (2, 3, 9, 10) ein Attribut eines bereits abgelegten Eintrages im Speicher (14, 15, 16, 17) des zweiten Kommunikationsgerätes (2, 3, 9, 10) zu ändern.

14. Kommunikationsgerät nach einem der Ansprüche 11 bis 13, **dadurch gekennzeichnet, dass** die Recheneinheit automatisch ein Attribut auswählt, das bei einer Verbindung mit dem zweiten Kommunikationsgerät (2, 3, 9, 10) einem Eintrag hinzugefügt wird.

15. Kommunikationsgerät nach einem der Ansprüche 11 bis 14, **dadurch gekennzeichnet, dass** im Speicher (13) des Kommunikationsgerätes (1) vorgegebene Attribute vorgegebenen zweiten Kommunikationsgeräten (2, 3, 9, 10) zugeordnet sind, und dass die Recheneinheit automatisch ein Attribut für das zweite Kommunikationsgerät (2, 3, 9, 10) auswählt, mit dem eine Verbindung aufgebaut wird, und dass bei einer Verbindung mit dem zweiten Kommunikationsgerät (2, 3, 9, 10) das ausgewählte Attribut dem Eintrag hinzugefügt wird.

16. Kommunikationsgerät (1) mit einer Recheneinheit, einem Speicher (13) und mit einer Schnittstelle zum Aufbauen einer Verbindung zu einem zweiten Kommunikationsgerät (2, 3, 9, 10), wobei das Kommunikationsgerät (1) in der Weise ausgebildet ist, dass nach dem Aufbau einer Verbindung mit dem zweiten Kommunikationsgerät (2, 3, 9, 10) ein Eintrag in dem Speicher (13) des Kommunikationsgeräts (1) abgelegt werden kann,
**dadurch gekennzeichnet,**
**dass** das Kommunikationsgerät (1) ausgebildet ist, um ein Attribut eines Eintrages zu überprüfen,
wobei das Attribut die Art und Weise der Speicherung und/oder Bearbeitung des Eintrages im Speicher (13) festlegt, und
**dass** das Kommunikationsgerät (1) die Art und Weise der Speicherung und/oder Bearbeitung des Eintrages im Speicher entsprechend dem Attribut ausführt.

17. Speichermedium mit einem ausführbaren Programm, **dadurch gekennzeichnet, dass** das Programm nach einem Verfahren nach einem der Ansprüche 1 bis 10 abläuft.
